# EUROPEAN PATENT SPECIFICATION

(11) **EP 2 751 183 B1**
(45) Date of publication and mention of the grant of the patent: **12.08.2015**
(21) Application number: 12733360.7
(22) Date of filing: 26.06.2012
(51) Int. Cl.: C08K 5/098

(54) **ACID RESISTANT FLUOROELASTOMER COMPOSITIONS**
SÄUREBESTÄNDIGE FLUORELASTOMERZUSAMMENSETZUNGEN
COMPOSITIONS D'ÉLASTOMÈRES FLUORÉS RÉSISTANT AUX ACIDES

(30) Priority: 31.08.2011 US 201113222126
(43) Date of publication of application: 09.07.2014
(73) Proprietor: E. I. du Pont de Nemours and Company, Wilmington, DE 19898 (US)
(72) Inventor: LYONS, Donald F., Wilmington, Delaware 19805 (US); MORKEN, Peter A., Wilmington, Delaware 19810 (US)
(74) Representative: Heinemann, Monica
(86) International application number: PCT/US2012/044108
(87) International publication number: WO 2013/032572

(56) References cited:
- WO-A1-95/02634
- WO-A1-2011/068835
- WO-A2-2012/021886
- US-A- 5 696 189
- US-B1- 6 319 972
- DATABASE WPI Week 200607 Thomson Scientific, London, GB; AN 2006-061360 XP002682718, -& JP 2006 002034 A (ASAHI GLASS CO LTD) 5 January 2006 (2006-01-05)
- B. BRADLEY ET AL: "REVIEW ARTICLE BISMUTH TOXICITY-A REASSESSMENT", JOURNAL OF CLINICAL PHARMACY AND THERAPEUTICS, vol. 14, 1989, pages 423-441, XP55037005,

## Description

### FIELD OF THE INVENTION

This invention relates to curable fluoroelastomer compositions comprising i) a peroxide curable fluoroelastomer, ii) an organic peroxide, iii) a multifunctional coagent and iv) an acid acceptor selected from the group consisting of a carboxylic acid salt of bismuth and a bismuth oxycarboxylate.

### BACKGROUND OF THE INVENTION

Fluoroelastomers having excellent heat resistance, oil resistance, and chemical resistance have been used widely for sealing materials, containers and hoses. Examples of fluoroelastomers include copolymers comprising units of vinylidene fluoride (VF₂) and units of at least one other copolymerizable fluorine-containing monomer such as hexafluoropropylene (HFP), tetrafluoroethylene (TFE), chlorotrifluoroethylene (CTFE), vinyl fluoride (VF), and a fluorovinyl ether such as a perfluoro(alkyl vinyl ether) (PAVE). Specific examples of PAVE include perfluoro(methyl vinyl ether), perfluoro(ethyl vinyl ether) and perfluoro(propyl vinyl ether). Other fluoroelastomers include copolymers comprising tetrafluoroethylene and perfluoro(methyl vinyl ether).

In order to fully develop physical properties such as tensile strength, elongation, and compression set, elastomers must be cured, i.e. vulcanized or crosslinked. In the case of fluoroelastomers, this is generally accomplished by mixing uncured polymer (i.e. fluoroelastomer gum) with a polyfunctional curing agent and heating the resultant mixture, thereby promoting chemical reaction of the curing agent with active sites along the polymer backbone or side chains. Interchain linkages produced as a result of these chemical reactions cause formation of a crosslinked polymer composition having a three-dimensional network structure. Commonly employed curing agents for fluoroelastomers include the combination of an organic peroxide with a multifunctional coagent. A metal oxide is typically added to the composition in order to improve retention of elastomer physical properties (e.g. elongation and tensile strength) at high temperature (>200°C).

However, cured fluoroelastomer articles may exhibit unacceptably high volume swell, e.g. 50-200 vol.%, that can lead to seal failure, when seals are exposed to certain chemicals such as acids or biodiesel fuel for long periods of time or at elevated temperatures. The swelling can be minimized by eliminating metal oxides from the compositions, but elastomer physical properties at high temperature suffer. It would be desirable to have a peroxide cured fluoroelastomer that has the combination of low volume swell in acid and retention of physical properties at high temperature.

U.S. Patent No. 6,319,972 B1 discloses thermoplastic vinylidene fluoride homopolymers and copolymers that contain certain bismuth carboxylate salts as thermal stabilizers.

### SUMMARY OF THE INVENTION

In one aspect, the present invention provides a curable fluoroelastomer composition comprising:
A) a peroxide curable fluoroelastomer;
B) an organic peroxide;
C) a multifunctional coagent; and
D) 1 to 60 parts by weight, per hundred parts by weight fluoroelastomer, of an acid acceptor selected from the group consisting of a carboxylic acid salt of bismuth and a bismuth oxycarboxylate.

### DETAILED DESCRIPTION OF THE INVENTION

The present invention is directed to curable fluoroelastomer compositions that, when cured with an organic peroxide, have reduced volume swell in acids. Exposure to nitric acid, in particular, represents a stringent test for acid resistance because of the acid's oxidizing nature and because of the high solubility of its salts in aqueous solution. Excessive swell after exposure to nitric acid indicates degradation of the crosslinked fluoroelastomer network. In addition, nitric acid solutions do not change during storage and provide a reproducible medium in which to evaluate acid resistance. The cured fluoroelastomer compositions have a variety of end uses, including turbocharger hoses and in fuel management systems having at least one fluororubber article in contact with biodiesel fuel. Because biodiesel fuel contains acidic components that either have been added deliberately or are generated by decomposition during storage or exposure to water, acid resistance is a requirement of any elastomer with which biodiesel fuel comes into contact.

By the term "fuel management system" is meant equipment employed in the manufacture, storage, transportation and supply, metering and control of biodiesel fuel. Fuel management systems include those contained in biodiesel manufacturing plants, motor vehicles (e.g. trucks, cars, boats), stationary diesel powered devices (e.g. electrical generators, portable pumping stations) and those associated with biodiesel fuel transportation, storage and dispensing. Specific elements of fuel management systems include, but are not limited to fuel tanks, filler neck hoses, fuel tank cap seals, fuel line hoses and tubing, valves, diaphragms, fuel sender seals and fuel injector components, o-rings, seals and gaskets. Any or all of these elements may comprise one or more fluororubber articles that contact biodiesel fuel. Cured fluororubber articles include, but are not limited to seals, gaskets, o-rings, tubing, the fuel contact layer of multilayer hoses, valve packings, diaphragms, and tank liners.

By "biodiesel fuel" is meant a fuel suitable for use in a compression ignition (diesel) engine compromising one or more fatty acid alkyl esters (FAAE) of biological origin (i.e. derived from animals or plants). These FAAEs are typically methyl or ethyl esters of fatty acids derived from vegetable oils or animal fats. Specific examples include rape seed oil methyl ester (RME), soybean oil methyl ester (SME), palm kernel oil methyl ester (PME) and the like. Also included are blends of these FAAE based materials with conventional petroleum based diesel fuel. Petroleum diesel/biodiesel blends are conventionally denoted as Bxx fuels where "xx" is the volume percent of the FAAE based biodiesel in the blend. For example, B100 denotes a biodiesel fuel containing no deliberately added petroleum component. B20 denotes biodiesel fuel containing 20 vol.% of a B100 fuel and 80 vol.% of petroleum diesel fuel.

Fluoroelastomers that are suitable for use in this invention are those that are curable by an organic peroxide and multifunctional coagent.

By "peroxide curable" is meant fluoroelastomers that contain Br or I cure sites along the polymer chain, at chain ends or in both locations.

Cure sites along the fluoroelastomer chain are typically due to copolymerized cure site monomers that contain bromine or iodine atoms. Examples of suitable cure site monomers include, but are not limited to: i) bromine -containing olefins; ii) iodine-containing olefins; iii) bromine-containing vinyl ethers; and iv) iodine-containing vinyl ethers.

Brominated cure site monomers may contain other halogens, preferably fluorine. Examples of brominated olefin cure site monomers are CF₂=CFOCF₂CF₂CF₂OCF₂CF₂Br; bromotrifluoroethylene; 4-bromo-3,3,4,4-tetrafluorobutene-1 (BTFB); and others such as vinyl bromide, 1-bromo-2,2-difluoroethylene; perfluoroallyl bromide; 4-bromo-1,1,2-trifluorobutene-1; 4-bromo-1,1,3,3,4,4,-hexafluorobutene; 4-bromo-3-chloro-1,1,3,4,4-pentatluorobutene; 6-bromo-5,5,6,6-tetrafluorohexene; 4-bromoperfluorobutene-1 and 3,3-difluoroallyl bromide. Brominated vinyl ether cure site monomers useful in the invention include 2-bromo-perfluoroethyl perfluorovinyl ether and fluorinated compounds of the class CF₂Br-R_{f}-O-CF=CF₂ (R_{f} is a perfluoroalkylene group), such as CF₂BrCF₂O-CF=CF₂, and fluorovinyl ethers of the class ROCF=CFBr or ROCBr=CF₂ (where R is a lower alkyl group or fluoroalkyl group) such as CH₃OCF=CFBr or CF₃CH₂OCF=CFBr.

Suitable iodinated cure site monomers include iodinated olefins of the formula: CHR=CH-Z-CH₂CHR-I, wherein R is -H or -CH₃; Z is a C₁-C₁₈ (per)fluoroalkylene radical, linear or branched, optionally containing one or more ether oxygen atoms, or a (per)fluoropolyoxyalkylene radical as disclosed in U.S. Patent 5,674,959. Other examples of useful iodinated cure site monomers are unsaturated ethers of the formula: I(CH₂CF₂CF₂)ₙOCF=CF₂ and ICH₂CF₂O[CF(CF₃)CF₂O]ₙCF=CF₂, and the like, wherein n=1-3, such as disclosed in U.S. Patent 5,717,036. In addition, suitable iodinated cure site monomers including iodoethylene, 4-iodo-3,3,4,4-tetrafluorobutene-1 (ITFB); 3-chloro-4- iodo-3,4,4-trifluorobutene; 2-iodo -1,1,2,2-tetrafluoro-1-(vinyloxy)ethane; 2- iodo-1-(perfluorovinyloxy)-1,1,-2,2-tetrafluoroethylene; 1,1,2,3,3,3-hexafluoro-2-iodo-1-(perfluorovinyloxy)propane; 2-iodoethyl vinyl ether; 3,3,4,5,5,5-hexafluoro-4-iodopentene; and iodotrifluoroethylene are disclosed in U.S. Patent 4,694,045. Allyl iodide and 2-iodo-perfluoroethyl perfluorovinyl ether are also useful cure site monomers.

Iodine-containing endgroups, bromine-containing endgroups or mixtures thereof may optionally be present at one or both of the fluoroelastomer polymer chain ends as a result of the use of chain transfer or molecular weight regulating agents during preparation of the fluoroelastomers. The amount of chain transfer agent, when employed, is calculated to result in an iodine or bromine level in the fluoroelastomer in the range of 0.005-5 wt.%, preferably 0.05-3 wt.%.

Examples of chain transfer agents include iodine-containing compounds that result in incorporation of a bound iodine atom at one or both ends of the polymer molecules. Methylene iodide; 1,4-diiodoperfluoro-n-butane; and 1,6-diiodo-3,3,4,4,tetrafluorohexane are representative of such agents. Other iodinated chain transfer agents include 1,3-diiodoperfluoropropane; 1,6-diiodoperfluorohexane; 1,3-diiodo-2-chloroperfluoropropane; 1,2-di(iododifluoromethyl)-perfluorocyclobutane; monoiodoperfluoroethane; monoiodoperfluorobutane; 2-iodo-1-hydroperfluoroethane, etc. Also included are the cyano-iodine chain transfer agents disclosed in European Patent 0868447A1. Particularly preferred are diiodinated chain transfer agents.

Examples of brominated chain transfer agents include 1-bromo-2-iodoperfluoroethane; 1-bromo-3-iodoperfluoropropane; 1-iodo-2-bromo-1,1-difluoroethane and others such as disclosed in U.S. Patent 5,151,492.

Specific examples of fluoroelastomers that may be employed in the invention include, but are not limited to copolymers comprising i) vinylidene fluoride, hexafluoropropylene and optionally tetrafluoroethylene, ii) vinylidene fluoride, perfluoro(methyl vinyl ether) and optionally tetrafluoroethylene, iii) tetrafluoroethylene and perfluoro(methyl vinyl ether), and iv) tetrafluoroethylene and propylene. All of the latter polymers having iodine or bromine atoms along the polymer chain, at the ends or both.

Organic peroxides suitable for use in the compositions of the invention include, but are not limited to 1,1-bis(t-butylperoxy)-3,5,5-trimethylcyclohexane; 1,1-bis(t-butylperoxy)cyclohexane; 2,2-bis(t-butylperoxy)octane; n-butyl-4, 4-bis(t-butylperoxy)valerate; 2,2-bis(t-butylperoxy)butane; 2,5-dimethylhexane-2,5-dihydroxyperoxide; di-t-butyl peroxide; t-butylcumyl peroxide; dicumyl peroxide; alpha, alpha'-bis(t-butylperoxy-m-isopropyl)benzene; 2,5-dimethyl-2,5-di(t-butylperoxy)hexane; 2,5-dimethyl-2,5-di(t-butylperoxy)hexene-3; benzoyl peroxide, t-butylperoxybenzene; 2,5-dimethyl-2,5-di(benzoylperoxy)-hexane; t-butylperoxymaleic acid; and t-butylperoxyisopropylcarbonate. Preferred examples of organic peroxides include 2,5-dimethyl-2,5-di(t-butylperoxy)hexane, dicumyl peroxide, and alpha, alpha'-bis(t-butylperoxy-m-isopropyl)benzene. The amount compounded is generally in the range of 0.05-5 parts by weight, preferably in the range of 0.1-3 parts by weight per 100 parts by weight of the fluoroelastomer. This particular range is selected because if the peroxide is present in an amount of less than 0.05 parts by weight, the vulcanization rate is insufficient and causes poor mold release. On the other hand, if the peroxide is present in amounts of greater than 5 parts by weight, the compression set of the cured polymer becomes unacceptably high. In addition, the organic peroxides may be used singly or in combinations of two or more types.

Multifunctional coagents employed in the curable compositions of this invention are polyfunctional unsaturated compounds such as triallyl cyanurate, trimethacryl isocyanurate, triallyl isocyanurate, trimethallyl isocyanurate, triacryl formal, triallyl trimellitate, N,N'-m-phenylene bismaleimide, diallyl phthalate, tetraallylterephthalamide, tri(diallylamine)-s-triazine, triallyl phosphite, bis-olefins and N,N-diallylacrylamide. The amount compounded is generally in the range of 0.1-10 parts by weight per 100 parts by weight of the fluoroelastomer. This particular concentration range is selected because if the coagent is present in amounts less than 0.1 part by weight, crosslink density of the cured polymer is unacceptable. On the other hand, if the coagent is present in amounts above 10 parts by weight, it blooms to the surface during molding, resulting in poor mold release characteristics. The preferable range of coagent is 0.2-6 parts by weight per 100 parts fluoroelastomer. The unsaturated compounds may be used singly or as a combination of two or more types.

The curable compositions of the invention also contain 1 to 60 parts by weight (preferably 4 to 40 parts) of at least one acid acceptor selected from the group consisting of a carboxylic acid salt of bismuth and a bismuth oxycarboxylate per hundred parts by weight fluoroelastomer. The bismuth compound acts as both an acid acceptor in order to facilitate the curing (crosslinking) reaction and as an anion exchange compound for scavenging any acidic substances such as HF or carboxylic acids. It is well known that bismuth salts have variable stoichiometry and that various amounts of water or hydroxide ions will be incorporated into a bismuth compound depending on the exact preparation and isolation conditions. The "sub" prefix is used when the formation of the bismuthyl (BiO+) ion is formally present. (Chemical Reviews, 1999, 2601). Suitable bismuth carboxylate compounds include bismuth acetate, bismuth benzoate, bismuth carbonate, bismuth citrate, bismuth 2-ethylhexanoate, bismuth neodeconate, and bismuth oxalate. Suitable bismuth oxycarboxylate compounds include bismuth subgallate, bismuth subcarbonate, and bismuth subsalicylate.

Optionally other acid acceptors (e.g. zinc oxide, magnesium oxide, calcium hydroxide) in addition to bismuth carboxylate salts or bismuth oxycarboxylate may be present in the curable compositions of the invention. If present, the level of other acid acceptor is between 1 and 30 parts by weight per 100 parts by weight fluoroelastomer.

The fluoroelastomer, curative, acid acceptor and any other ingredients are generally incorporated into a curable composition by means of an internal mixer or rubber mill. The resulting composition may then be shaped (e.g. molded or extruded) and cured to form a fluororubber article. Curing typically takes place at about 150°-200°C for 1 to 60 minutes. Conventional rubber curing presses, molds, extruders, and the like provided with suitable heating and curing means can be used. Also, for optimum physical properties and dimensional stability, it is preferred to carry out a post curing operation wherein the molded or extruded fluororubber article is heated in an oven or the like for an additional period of about 1-48 hours, typically from about 180°-275°C.

### EXAMPLES

### TEST METHODS

Volume Swells (%) after immersion in acidic media were determined by ASTM D471-96 on standard ASTM D471 coupons. The coupons were prepared from cured fluororubber slabs and immersed in acidic media under the conditions noted in the Examples.

Tensile properties were determined by ASTM D412.

Compression set resistance was measured according to ASTM D395.

The invention is further illustrated by, but is not limited to, the following examples.

Fluoroelastomer FKM1 employed in the examples was Viton® GF-600S, a 70 weight percent fluorine content copolymer of vinylidene fluoride, hexafluoropropylene and tetrafluoroethylene containing iodine cure sites, available from DuPont.

Fluoroelastomer FKM2 employed in the examples was Viton® GBL-600S, a 68 weight percent fluorine content copolymer of vinylidene fluoride, hexafluoropropylene and tetrafluoroethylene containing iodine cure sites, available from DuPont.

Fluoroelastomer FKM3 employed in the examples was Viton® GF, a 69.5 weight percent fluorine content copolymer of vinylidene fluoride, hexafluoropropylene and tetrafluoroethylene containing bromine cure sites, available from DuPont.

Fluoroelastomer FKM4 employed in the examples was Viton® GLT-600S, a 64 weight percent fluorine content copolymer of vinylidene fluoride, tetrafluoroethylene and perfluoro(methyl vinyl ether) containing iodine cure sites, available from DuPont.

Fluoroelastomer FFKM1 employed in the examples was a copolymer of tetrafluoroethylene and perfluoro(methyl vinyl ether) containing iodine cure sites and prepared by semi-batch emulsion polymerization.

All bismuth compounds employed in the examples were from Alfa Aesar.

### Example 1 and Comparative Examples A, B, and C

Curable compositions for Example 1 and Comparative Examples A, B, and C were made by compounding the ingredients on a two-roll mill. Formulations are shown in Table I.

The compositions were molded into slabs and press cured at 177°C for 10 minutes. The cured slabs were then post-cured for 4 hours at 232°C.

Coupons made from cured slabs were exposed to 70% nitric acid for 70 hours at 70°C.

This example demonstrates that compositions containing bismuth subsalicylate display both adequate acid resistance and acceptable heat resistance. Compositions containing zinc oxide display adequate heat resistance, but poor acid resistance. A metal oxide-free composition displays adequate acid resistance but poor heat resistance.

**TABLE I**

| **Ingredient, phr¹** | **Ex. 1** | **Comp. Ex. A** | **Comp. Ex. B** | **Comp. Ex. C** |
|---|---|---|---|---|
| FKM1 | 100 | 100 | 100 | 100 |
| ZnO | 0 | 15 | 7.5 | 0 |
| Bismuth subsalicylate | 15 | 0 | 7.5 | 0 |
| Carbon black N990 | 8 | 8 | 8 | 8 |
| Diak 7² | 3 | 3 | 3 | 3 |
| Varox DBPH-50³ | 1.5 | 1.5 | 1.5 | 1.5 |
| Original tensile properties | | | | |
| T_{B}, MPa | 17.6 | 18.1 | 16.1 | 19.8 |
| E_{B}, % | 376 | 368 | 360 | 408 |
| Percent change in tensile properties after 70 hours @ 250°C | | | | |
| T_{B} | -12 | +28 | +11 | -35 |
| E_{B} | +3 | +29 | +13 | +23 |
| Percent change in tensile properties after 168 hours @ 250°C | | | | |
| T_{B} | -17 | 0 | +9 | -55 |
| E_{B} | +11 | +18 | +26 | +7 |
| Volume swell in 70% nitric acid | | | | |
| 70 hours at 70°C | 32 | 107 | 71 | 5 |

| | | | | |
|---|---|---|---|---|
| ¹ parts by weight per hundred parts rubber (i.e. fluoroelastomer) ² triallyl isocyanurate coagent available from DuPont ³ organic peroxide available from R. T. Vanderbilt | | | | |

### Example 2 and Comparative Examples D, E, and F

Curable compositions for Example 2 and Comparative Example D, E, and F were made by compounding the ingredients on a two roll mill. Formulations are shown in Table II.

The compositions were molded into slabs and press cured at 177°C for 10 minutes. The cured slabs were then post-cured for 4 hours at 232°C.

Coupons made from cured slabs were exposed to 70% nitric acid for 70 hours at 70°C and 100% acetic acid for 168 hours at 100°C.

This example demonstrates that fluororubber containing bismuth subsalicylate displays better acid resistance than fluororubber containing either zinc oxide or magnesium oxide in a compound based on a 68 weight percent fluorine content polymer.

**TABLE II**

| **Ingredient, phr¹** | **Ex. 2** | **Comp. Ex. D** | **Comp. Ex. E** | **Comp. Ex. F** |
|---|---|---|---|---|
| FKM2 | 100 | 100 | 100 | 100 |
| ZnO | 0 | 5 | 0 | 0 |
| Elastomag 170⁴ | 0 | 0 | 5 | 0 |
| Bismuth subsalicylate | 5 | 0 | 0 | 0 |
| Carbon black N990 | 30 | 30 | 30 | 30 |
| Diak 7² | 2.5 | 2.5 | 2.5 | 2.5 |
| Varox DBPH-50³ | 1.75 | 1.75 | 1.75 | 1.75 |
| Original tensile properties | | | | |
| T_{B}, MPa | 20.4 | 19.0 | 20.0 | 21.1 |
| E_{B}, % | 264 | 249 | 201 | 251 |
| Percent change in tensile properties after 70 hours @ 250°C | | | | |
| T_{B} | -13 | +13 | -15 | -35 |
| E_{B} | +27 | +25 | +39 | +23 |
| Percent change in tensile properties after 168 hours @ 250°C | | | | |
| T_{B} | -36 | -76 | -35 | -55 |
| E_{B} | +35 | +24 | +57 | +57 |
| Volume swell | | | | |
| 70% nitric acid for 70 hours at 70°C | 10 | 22 | 23 | 6 |
| 100% acetic acid for 168 hours at 100°C | 29 | 33 | 40 | 28 |

| | | | | |
|---|---|---|---|---|
| ⁴ magnesium oxide available from Martin Marietta Magnesium Specialties | | | | |

### Examples 3 and Comparative Examples G, H and I

Curable compositions for Example 3 and Comparative Examples G, H and I were made by compounding the ingredients on a two roll mill. Formulations are shown in Table III.

The compositions were molded into slabs and press cured at 177°C for 10 minutes. The cured slabs were then post-cured for 4 hours at 232°C.

This example demonstrates that bismuth subsalicylate can induce the cure of a bromine-containing fluoroelastomer. Metal oxide-free compositions do not cure. It also demonstrates that bismuth subsalicylate behaves differently than bismuth oxide, which also does not induce the cure of a bromine-containing fluoroelastomer.

**TABLE III**

| **Ingredient, phr¹** | **Ex. 3** | **Comp. Ex. G** | **Comp. Ex. H** | **Comp. Ex. I** |
|---|---|---|---|---|
| FKM3 | 100 | 100 | 100 | 100 |
| ZnO | 0 | 4 | 0 | 0 |
| Bismuth oxide | 0 | 0 | 4 | 0 |
| Bismuth subsalicylate | 4 | 0 | 0 | 0 |
| Diak 7² | 3 | 3 | 3 | 3 |
| Varox DBPH-50³ | 1.5 | 1.5 | 1.5 | 1.5 |
| Original tensile properties | | | | |
| T_{B}, MPa | 8.0 | 10.6 | Did not cure | Did not cure |
| E_{B}, % | 346 | 327 | xxx | xxx |
| Percent change in tensile properties after 70 hours @ 250°C | | | | |
| T_{B} | 27.9 | 82.7 | xxx | xxx |
| E_{B} | 26.6 | 22.2 | xxx | xxx |
| Percent change in tensile properties after 168 hours @ 250°C | | | | |
| T_{B} | 29.1 | 64.7 | xxx | xxx |
| E_{B} | 59.8 | 35.8 | xxx | xxx |

### Examples 4 and 5 and Comparative Example J

Curable compositions for Examples 4 and 5 and Comparative Example J were made by compounding the ingredients on a two roll mill. Formulations are shown in Table IV.

The compositions were molded into slabs and O-rings (for compression set testing) and press cured at 177°C for 10 minutes. The cured slabs and O-rings were then post-cured for 4 hours at 232°C.

Coupons made from cured slabs were exposed to 70% nitric acid for 70 hours at 70°C.

This example demonstrates that compositions containing bismuth subsalicylate display both adequate acid resistance and acceptable heat resistance in a perfluoro(methyl vinyl ether)-containing fluoroelastomer. A metal oxide-free composition displays adequate acid resistance but poor heat resistance.

**TABLE IV**

| **Ingredient, phr¹** | **Ex. 4** | **Ex. 5** | **Comp. Ex. J** |
|---|---|---|---|
| FKM4 | 100 | 100 | 100 |
| Bismuth subsalicylate | 3 | 5 | 0 |
| Carbon black N990 | 30 | 30 | 30 |
| Diak 7² | 3 | 3 | 3 |
| Varox DBPH-50³ | 1.5 | 1.5 | 1.5 |
| Oriqinal tensile properties | | | |
| T_{B}, MPa | 18.7 | 17.9 | 18.8 |
| E_{B}, % | 285 | 277 | 280 |
| Percent change in tensile properties after 70 hours @ 250°C | | | |
| T_{B} | -3 | -9 | -29 |
| E_{B} | +14 | +2 | +23 |
| Percent change in tensile properties after 168 hours @ 250°C | | | |
| T_{B} | -28 | -24 | -45 |
| E_{B} | +17 | +14 | +24 |
| Volume swell | | | |
| 70% nitric acid for 70 hours at 70°C | 13 | 15 | 8 |
| Compression set | | | |
| 70 hours @ 200°C | 24 | 27 | 26 |

### Example 6

The curable composition for Example 6 was made by compounding the ingredients on a two roll mill. The formulation is shown in Table V.

The composition was molded into slabs and O-rings (for compression set testing) and press cured at 165°C for 10 minutes. The cured slabs and O-rings were then post-cured for 4 hours at 232°C.

Coupons made from cured slabs were exposed to 70% nitric acid for 70 hours at 70°C.

This example demonstrates that a composition containing bismuth subsalicylate displays both adequate acid resistance and acceptable heat resistance in a perfluoroelastomer.

**TABLE V**

| **Ingredient, phr¹** | **Ex. 6** |
|---|---|
| FFKM1 | 100 |
| Bismuth subsalicylate | 3 |
| Carbon black N990 | 15 |
| Diak 7² | 2 |
| Varox DBPH-50³ | 1.25 |
| Original tensile properties | |
| T_{B}, MPa | 20.9 |
| E_{B}, % | 188 |
| Percent change in tensile properties after 70 hours @ 250°C | |
| T_{B} | -1 |
| E_{B} | +24 |
| Percent change in tensile properties after 168 hours @ 250°C | |
| T_{B} | -22 |
| E_{B} | +29 |
| Volume swell | |
| 70% nitric acid for 168 hours at 85°C | 11 |
| 100% acetic acid for 168 hours at 100°C | 21 |
| Compression set | |
| 70 hours at 200°C | 8 |

### Examples 7 - 9

Curable compositions for Examples 7, 8, and 9 were made by compounding the ingredients on a two-roll mill. Formulations are shown in Table VI.

The compositions were molded into slabs and press cured at 177°C for 10 minutes. The cured slabs were then post-cured for 4 hours at 232°C.

Coupons made from cured slabs were exposed to 70% nitric acid for 70 hours at 70°C.

These examples demonstrate that the carboxylic acid salts of bismuth are also effective at improving the acid resistance of fluoroelastomer compositions while maintaining adequate heat resistance.

**Table VI**

| **Ingredient, phr¹** | **Ex. 7** | **Ex. 8** | **Ex. 9** |
|---|---|---|---|
| FKM1 | 100 | 100 | 100 |
| Bismuth subsalicylate | 5 | 0 | 0 |
| Bismuth citrate | 0 | 5 | 0 |
| Bismuth subcarbonate | 0 | 0 | 5 |
| Carbon black N990 | 30 | 30 | 30 |
| Diak 7**²** | 3 | 3 | 3 |
| Varox DBPH-50³ | 1.5 | 1.5 | 1.5 |
| Original tensile properties | | | |
| T_{B}, MPa | 18.6 | 18.6 | 19.9 |
| E_{B}, % | 309 | 282 | 325 |
| Percent change in tensile properties after 70 hours @ 250°C | | | |
| T_{B} | +1 | -3 | -9 |
| E_{B} | +16 | +23 | +5 |
| Percent change in tensile properties after 168 hours @ 250°C | | | |
| T_{B} | -24 | -28 | -32 |
| E_{B} | +32 | +37 | +12 |
| Volume swell | | | |
| 70% nitric acid for 70 hours at 70°C | 12 | 14 | 15 |

## Claims

1. A curable fluoroelastomer composition comprising:
A) a peroxide curable fluoroelastomer;
B) an organic peroxide;
C) a multifunctional coagent; and
D) 1 to 60 parts by weight, per hundred parts by weight fluoroelastomer, of an acid acceptor selected from the group consisting of a carboxylic acid salt of bismuth and a bismuth oxycarboxylate.

2. The curable fluoroelastomer composition of claim 1 wherein said acid acceptor is a carboxylic salt of bismuth selected from the group consisting of bismuth acetate, bismuth benzoate, bismuth carbonate, bismuth citrate, bismuth 2-ethylhexanoate, bismuth neodeconate, and bismuth oxalate.

3. The curable fluoroelastomer composition of claim 1 wherein said acid acceptor is a bismuth oxycarboxylate selected from the group consisting of bismuth subgallate, bismuth subcarbonate, and bismuth subsalicylate.

4. The curable fluoroelastomer composition of claim 3 wherein said acid acceptor is bismuth subcarbonate.

5. The curable fluoroelastomer composition of claim 3 wherein said acid acceptor is bismuth subsalicylate.

6. The curable fluoroelastomer composition of claim 1 wherein said peroxide curable fluoroelastomer comprises copolymerized units of vinylidene fluoride, hexafluoropropylene and tetrafluoroethylene.

7. The curable fluoroelastomer composition of claim 1 wherein said peroxide curable fluoroelastomer comprises copolymerized units of vinylidene fluoride, perfluoro(methyl vinyl ether) and tetrafluoroethylene.

8. The curable fluoroelastomer composition of claim 1 wherein said peroxide curable fluoroelastomer comprises copolymerized units of tetrafluoroethylene and perfluoro(methyl vinyl ether).

9. A cured fluoroelastomer article made from the composition of claim 1.

10. A fuel management system comprising a cured fluoroelastomer article of claim 9.

## Patentansprüche

1. Aushärtbare Fluorelastomerzusammensetzung umfassend:
A) ein mit Peroxid aushärtbares Fluorelastomer;
B) ein organisches Peroxid;
C) ein multifunktionelles Coagens; und
D) 1 bis 60 Gewichsteile, pro hundert Gewichtsteile Fluorelastomer, eines Säureakzeptors ausgewählt aus der Gruppe bestehend aus einem Carbonsäuresalz von Bismut und einem Bismutoxycarboxylat.

2. Aushärtbare Fluorelastomerzusammensetzung nach Anspruch 1, wobei der Säureakzeptor ein Carbonsäuresalz von Bismut ist ausgewählt aus der Gruppe bestehend aus Bismutacetat, Bismutbenzoat, Bismutcarbonat, Bismutcitrat, Bismut-2-ethylhexanoat, Bismutneodecanoat und Bismutoxalat.

3. Aushärtbare Fluorelastomerzusammensetzung nach Anspruch 1, wobei der Säureakzeptor ein Bismutoxycarboxylat ist ausgewählt aus der Gruppe bestehend aus Bismutsubgallat, Bismutsubcarbonat und Bismutsubsalicylat.

4. Aushärtbare Fluorelastomerzusammensetzung nach Anspruch 3, wobei der Säureakzeptor Bismutsubcarbonat ist.

5. Aushärtbare Fluorelastomerzusammensetzung nach Anspruch 3, wobei der Säureakzeptor Bismutsubsalicylat ist.

6. Aushärtbare Fluorelastomerzusammensetzung nach Anspruch 1, wobei das durch Peroxid aushärtbare Fluorelastomer copolymerisierte Einheiten von Vinylidenfluorid, Hexafluorpropylen und Tetrafluorethylen umfasst.

7. Aushärtbare Fluorelastomerzusammensetzung nach Anspruch 1, wobei das durch Peroxid aushärtbare Fluorelastomer copolymerisierte Einheiten von Vinylidenfluorid, Perfluor(methylvinylether) und Tetrafluorethylen umfasst.

8. Aushärtbare Fluorelastomerzusammensetzung nach Anspruch 1, wobei das durch Peroxid aushärtbare Fluorelastomer copolymerisierte Einheiten von Tetrafluorethylen und Perfluor(methylvinylether) umfasst.

9. Ausgehärteter Fluorelastomerartikel, der aus der Zusammensetzung nach Anspruch 1 hergestellt ist.

10. Kraftstoffhandhabungssystem umfassend einen ausgehärteten Fluorelastomerartikel nach Anspruch 9.

## Revendications

1. Composition durcissable d'élastomère fluoré comprenant:
A) un élastomère fluoré durcissable par un peroxyde;
B) un peroxyde organique;
C) un coagent multifonctionnel; et
D) 1 à 60 partie(s) en poids, pour cent parties en poids d'élastomère fluoré, d'un accepteur d'acide sélectionné parmi le groupe constitué du sel d'acide carboxylique de bismuth et d'un oxycarboxylate de bismuth.

2. Composition durcissable d'élastomère fluoré selon la revendication 1, ledit accepteur d'acide étant un sel carboxylique de bismuth sélectionné parmi le groupe constitué de l'acétate de bismuth, du benzoate de bismuth, du carbonate de bismuth, du citrate de bismuth, du 2-éthylhexanoate de bismuth, du néodéconate de bismuth, et de l'oxalate de bismuth.

3. Composition durcissable d'élastomère fluoré selon la revendication 1, ledit accepteur d'acide étant un oxycarboxylate de bismuth sélectionné parmi le groupe constitué du sous-gallate de bismuth, du sous-carbonate de bismuth, et du sous-salicylate de bismuth.

4. Composition durcissable d'élastomère fluoré selon la revendication 3, ledit accepteur d'acide étant un sous-carbonate de bismuth.

5. Composition durcissable d'élastomère fluoré selon la revendication 3, ledit accepteur d'acide étant un sous-salicylate de bismuth.

6. Composition durcissable d'élastomère fluoré selon la revendication 1, ledit élastomère fluoré durcissable par un peroxyde comprenant des motifs copolymérisés de fluorure de vinylidène, d'hexafluoropropylène et de tétrafluoroéthylène.

7. Composition durcissable d'élastomère fluoré selon la revendication 1, ledit élastomère fluoré durcissable par un peroxyde comprenant des motifs copolymérisés de fluorure de vinylidène, de perfluoro(éther de méthyl vinyle) et de tétrafluoroéthylène.

8. Composition durcissable d'élastomère fluoré selon la revendication 1, ledit élastomère fluoré durcissable par un peroxyde comprenant des motifs copolymérisés de tétrafluoroéthylène et de perfluoro(éther de méthyl vinyle).

9. Article durci d'élastomère fluoré fabriqué à partir de la composition selon la revendication 1.

10. Système de gestion de carburant comprenant un article durci d'élastomère fluoré selon la revendication 9.
